(19) Europäisches Patentamt

European Patent Office

Office européen des brevets

(11) Publication number: **0 406 755 A2**

(12) **EUROPEAN PATENT APPLICATION**

(21) Application number: 90112579.9

(51) Int. Cl.⁵: **B29C 45/24**

(22) Date of filing: **02.07.90**

(30) Priority: **06.07.89 IT 4164889**

(43) Date of publication of application:
**09.01.91 Bulletin 91/02**

(84) Designated Contracting States:
**DE ES FR**

(71) Applicant: **Calzaturificio F.lli DANIELI S.p.A.**
**Via Mazzini 20**
**I-31031 Caerano San Marco Treviso(IT)**

(72) Inventor: **Danieli, Diego**
**Via Beolco**
**I-31031 Caerano San Marco (Treviso)(IT)**
Inventor: **Gatto, Bruno**
**Via Unione 123**
**I-31050 Fanzolo (Treviso)(IT)**
Inventor: **Piccolo, Nedo**
**Via Campagna Maser 10**
**I-31010 Maser (Treviso)(IT)**

(74) Representative: **Modiano, Guido et al**
**MODIANO, JOSIF, PISANTY & STAUB**
**Modiano & Associati Via Meravigli, 16 16 16**
**I-20123 Milano(IT)**

(54) **Machine for cleaning injectors, particularly of the type used for the molding of elements made of plastic material.**

(57) The present invention relates to a machine for cleaning injectors for the molding of elements made of plastic material. The machine (1) comprises a base (2) which is adjacent to the injector of a mold; a support (3) is fixed on the base (2) and has guides (4,5) for the sliding of a head (7) which is slidable thereon in a reciprocating manner in a direction which is orthogonal to the axis of the injector and is actuated by a fluid-actuated piston (10). A rotating disk (13) is coupled to the head (7) and is associated with a hydraulic actuation motor (15); a plurality of teflon pins (14), suitable for lapping the terminal nib of the injector, extends from a face of the disk (13).

Fig.1

# MACHINE FOR CLEANING INJECTORS, PARTICULARLY OF THE TYPE USED FOR THE MOLDING OF ELEMENTS MADE OF PLASTIC MATERIAL

The present invention relates to a machine for cleaning injectors, in particular for injectors used in the molding of elements made of plastic material.

It is known that the injection-molding of many components for items of footwear, in particular of soles, occurs by injecting into the mold a two-component mixture which expands and sets inside said mold.

Due to this reason, the injector is provided with an appropriate nozzle for mixing the components to be injected which homogenates them before transferring them into the mold.

The terminal region of the nozzle is therefore in contact with product which is already mixed and in which in practice the reaction and consequent setting have already begun.

Due to this reason, at the end of every molding operation, after the injector has separated from the mold, a particular solvent is introduced therein which washes it, preventing settings of the two-component mixture which would clog the injection hole.

However, this causes the forming of drops, caused by the expulsion of the washing solvent and of the two-component mixture, on the surface of the nozzle which abuts on the mold.

By setting, said drops compromise the coupling between the mold and the nozzle, allowing the possibility of leakages of material during injection which cause problems as regards the correct manufacture of the product, since in order to obtain a given final porosity, as well as certain mechanical characteristics, the amount of injected material is set and metered.

Therefore any leakages decrease the amount of material which enters the mold, compromising the final result.

Due to this reason, an operator is currently needed proximate to the injection nozzle; upon every molding operation and subsequent washing operation, said operator cleans with a rag the surface of the injector nozzle which abuts on the mold.

The aim of the present invention is to provide a cleaning machine which can replace the operator assigned to the cleaning of the injection nozzle in the molding of elements made of plastic material with component mixtures.

A consequent primary object is to reduce, by providing a machine with superior cleaning results, the percentage of molding rejects caused by an imperfect coupling between the injector nozzle and the mold with consequent leakages of material during injection.

Another important object is to provide a machine the use whereof allows a saving in the labor used for the production of elements made of plastic material with two-component mixtures.

Not least object is to provide a cleaning machine which can be produced at low cost with easily available materials.

This aim, these objects and others which will become apparent hereinafter are achieved by a machine for cleaning injectors, particularly of the type used for the molding of elements made of plastic material, characterized in that it comprises a base which is arranged adjacent to the injector of a mold, a support being fixed on said base, said support having sliding guides for a head which is associated with means which actuate it in a reciprocating manner in a direction which is orthogonal to the axis of said injector, a rotating disk being associated with said head, said disk being associated with respective actuation means, a plurality of pins made of soft material extending from a face of said disk, said pins being suitable for lapping the terminal nib of said injector.

Further characteristics and advantages will become apparent from the detailed description of an embodiment of the invention, illustrated only by way of non-limitative example in the accompanying drawings, wherein:

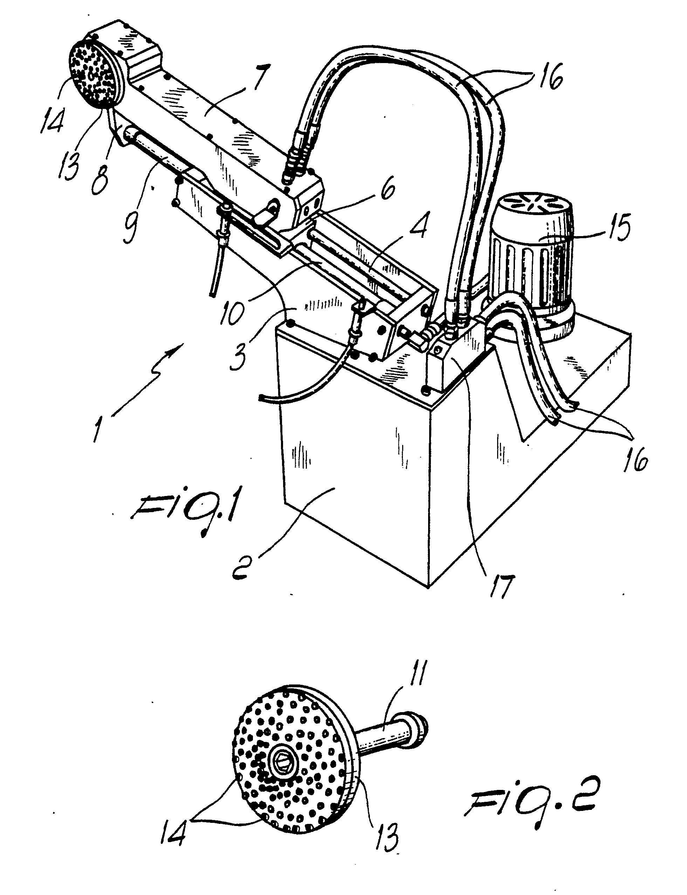

figure 1 is a perspective view of the cleaning machine according to the invention;

figure 2 is an enlarged perspective detail view of the rotating cleaning disk associated with the machine of figure 1;

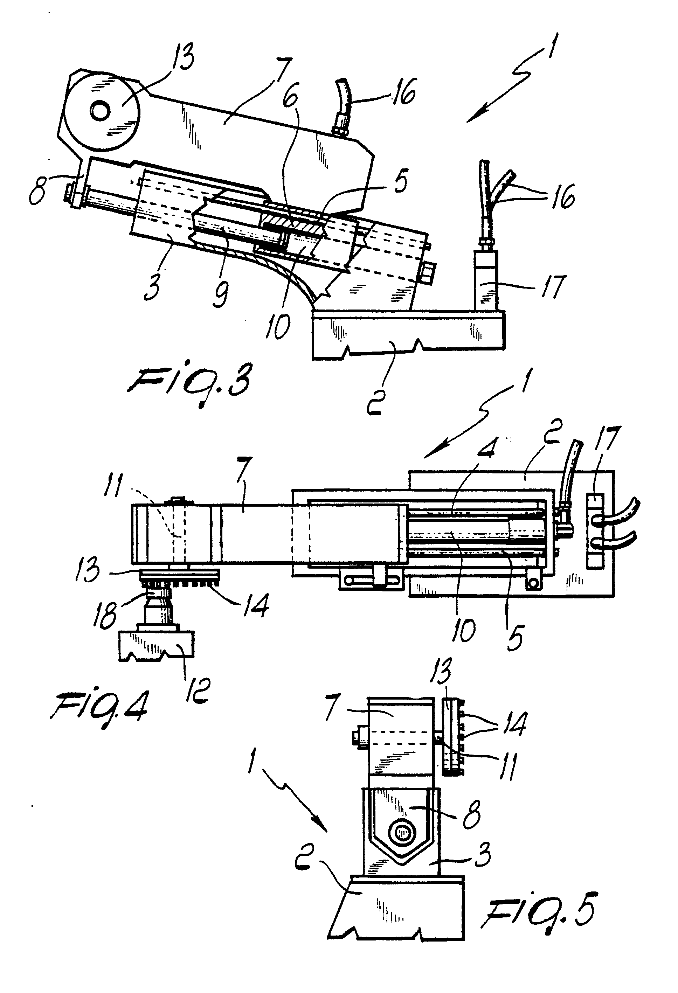

figure 3 is a partially sectional side view of the machine of figure 1;

figure 4 is a plan view of the machine of figure 1 during its operation;

figure 5 is a profile view of the machine of figure 1.

With reference to the above figures, a machine for cleaning injectors, particularly injectors used for the molding of elements made of plastic material, is generally indicated by the reference numeral 1 and comprises a base 2, preferably made of metallic material, on which a support 3 is connected, advantageously by being bolted thereto; said support is advantageously constituted by a substantially parallelepipedal metallic box-like element which extends from said base 2 and is advantageously inclined upward with respect to a horizontal plane.

Said support 3, and therefore the base 2, are conveniently arranged adjacent to the injector of a mold.

Guiding means advantageously comprised of two parallel guiding means are fixed longitudinally inside said support 3, which is conveniently open upward; said guiding means are advantageously constituted by metallic cylindrical bars 4 and 5 which are inserted in corresponding holes which traverse a substantially parallelepipedal preferably metallic sliding element 6 which is therefore slidable inside the support 3.

A substantially box-like head 7, also preferably made of metallic material, is fixed on said metallic sliding element 6 and substantially has the shape of an elongated parallelepiped with a length which substantially corresponds to the length of the support 3.

Said box-like head 7 is slidable between a position which is substantially contained within the contour of the support 3 and a position which protrudes almost completely therefrom.

A tab 8 extends downward from the protruding end of said head 7, and the end of the stem 9 of a double-action fluid-actuated piston 10, which passes through said element 6 and is fixed to the support 3, is fixed to said tab 8.

Said fluid-actuated piston 10, actuated by known reciprocating actuation means, is suitable for causing the box-like head 7 to perform a reciprocating motion on the support 3.

According to the invention, a small shaft 11 is rotationally coupled in the protruding end of said box-like head 7; in the working operation of the machine, the shaft 11 is advantageously arranged along an axis which is parallel to the axis of the injector 12; a disk 13 is fixed to said shaft, and injection nozzle nib cleaning means are advantageously provided on said disk. In the preferred embodiment, such means comprise a plurality of pins 14 made of soft material, for example of the type commonly termed "teflon", which extend from a face of said disk.

Said disk 13 is actuated by a hydraulic motor 15 which is associated with the base 2 and is connected to the disk by means of tubes 16 and a distributor block 17 interposed therebetween.

Said pins made of soft material are suitable for lapping the terminal nib 18 of the injector 12, cleaning it from any drops of solvent and/or material to be injected which can form thereon between one molding operation and the next.

The machine is in fact actuated before the injector moves to mate with the corresponding hole in the mold and, by virtue of the combination of the translatory motion of the head with the rotary motion of the disk, obtains the complete cleaning of the face of the injection nozzle which abuts with the mold.

From what has been described, the aim and objects of the present invention are therefore achieved, since by virtue of the machine according to the invention the presence of the operator, who currently cleans the nozzle with manual operations, is eliminated.

The invention thus conceived is susceptible to numerous modifications and variations, all of which are within the scope of the inventive concept.

All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Machine for cleaning injectors, particularly of the type used for the molding of elements made of plastic material, characterized in that it comprises a base (2) adjacent to the injector of a mold, a support (3) being fixed on said base (2), said support (3) having sliding guides (4,5) for a head (7) associated with means (8,9,10) which actuate it in a reciprocating manner in a direction which is orthogonal to the axis of said injector, a rotating disk (13) being coupled to said head (7), said disk (13) being associated with respective actuation means (15), a plurality of pins (14) made of soft material extending from a face of said disk (13), said pins (14) being suitable for lapping the terminal nib of said injector.

2. Cleaning machine according to claim 1, characterized in that said support (3) has a substantially parallelepipedal shape and is inclined upward with respect to a horizontal plane, said support (3), which is open in an upward direction, having said sliding guides (4,5) fixed internally thereto.

3. Cleaning machine according to claims 1 and 2, characterized in that said sliding guides (4,5) are constituted by two parallel metallic cylindrical rods.

4. Cleaning machine according to claims 1, 2 and 3, characterized in that a parallelepipedal element (6) is fixed to said head (7) and is slidable inside said support (3), said parallelepipedal element (6) having holes in which said sliding guides (4,5) are inserted.

5. Cleaning machine according to one or more of the preceding claims, characterized in that said head (7) has a substantially parallelepipedal shape with a length which is substantially equal to that of said support (3) and is slidable between a position which protrudes completely therefrom and a position which is substantially comprised within its contour.

6. Cleaning machine according to one or more of the preceding claims, characterized in that a tab (8) extends downward from the protruding end of said head (7), the end of the stem (9) of a double-action fluid-actuated piston (10) being fixed to said tab (8), said piston (10) passing through said sliding element (6) and being fixed to said support (3).

7. Cleaning machine according to one or more of the preceding claims, characterized in that a small shaft (11) is rotationally coupled in the protruding ends of said head (7) and is arranged horizontally along an axis which is parallel to the axis of said injector, said shaft (11), to which said rotating disk (13) is fixed, being actuated by a hydraulic motor (15) which is arranged on said base (2) and is connected thereto by means of tubes (16) between which a distribution block (17) is interposed.

8. Cleaning machine according to one or more of the preceding claims, characterized in that said pins (14) made of soft material are preferably constituted by the material commonly termed "teflon".

9. Machine for cleaning injector nozzles, particularly of the type used for the molding of plastic elements, characterized in that it comprises a base (2) to which is connected a support (3), said support (3) having guiding means (4,5) which slidingly guide a sliding head element (6,7), said sliding head element (6,7) being reciprocatingly slidingly actuated on said guiding means (4,5) by reciprocating actuation means (9,10), a rotating disk (13) being rotatingly coupled to said sliding head element (6,7) and being rotatingly actuated by respective actuation means (15), said disk (13) being provided on one face thereof with injection nozzle nib cleaning means (14).

10. Cleaning machine according to claim 9, characterized in that in its operation, said disk (13) rotates in a plane being substantially perpendicular to an extension axis of an injection nozzle to be cleaned and said sliding head element (6,7) slides linearly in a direction being substantiallly perpendicular to said extension axis.

Fig.1

Fig.2

Fig.3

Fig.4

Fig.5